**Europäisches Patentamt**

**European Patent Office**

**Office européen des brevets**

(11) Veröffentlichungsnummer: **0 445 665 A1**

## (12) EUROPÄISCHE PATENTANMELDUNG

(21) Anmeldenummer: **91103095.5**

(22) Anmeldetag: **01.03.91**

(51) Int. Cl.5: **F16D 3/76**

(30) Priorität: **08.03.90 DE 4007341**

(43) Veröffentlichungstag der Anmeldung:
**11.09.91 Patentblatt 91/37**

(84) Benannte Vertragsstaaten:
**DE FR GB IT**

(71) Anmelder: **Xaver Fendt & Co.
Johann-Georg-Fendt-Strasse 4
W-8952 Marktoberdorf(DE)**

(72) Erfinder: **Nett, Hans-Peter
Vogteistrasse 18
W-8952 Marktoberdorf(DE)**

(54) **Drehelastische Wellenverbindung.**

(57) Bekannte drehelastische Wellenverbindungen mit mehreren gleichartigen Verbindungselementen, die aus einem ringförmigen, elastischen Körper und zwei mit diesem Körper flächig verbundenen Endgliedern bestehen, müssen durch konstruktive Überarbeitung unterschiedlichsten zu übertragenden Drehmomenten angepasst werden.

Um derartige Verbindungselemente ohne wesentliche bauliche Änderungen der Wellenverbindung innerhalb eines großen Drehmomentbereiches einsetzbar zu machen, erfolgt die Drehmomentübertragung zwischen den Wellen (1,2) über den Wellen zugeordnete Kerbverzahnungen (3b,7a) sowie mit Kerbverzahnungen (4e,4g) versehene Kränze (4d,4f,8c,8e) der Verbindungselemente (4,8).

Damit kann die Anzahl der Verbindungselemente in einfacher Weise dem zu übertragenen Drehmoment angepasst werden.

Fig. 1

Fig. 2

EP 0 445 665 A1

Die Erfindung betrifft eine drehelastische Wellenverbindung unter Verwendung mehrerer gleicher elastischer Verbindungselemente, die aus einem ringförmigen, elastischen Körper und zwei mit diesem Körper flächig verbundenen Endgliedern bestehen, von denen jeweils eines einer der Wellen zugeordnet und über einen aus der im wesentlichen von dem elastischen Körper gebildeten Außenkontur des Verbindungselements nach innen bzw. nach außen herausragenden Kranz drehfest mit ihr verbunden ist.

Derartige Wellenverbindungen sind beispielsweise aus dem deutschen Gebrauchsmuster 74 30 833 bekannt. Zur Drehmomentübertragung sind bei der dort beschriebenen Ausgleichskupplung zwei elastische Verbindungselemente für die Wellen vorhanden, die mittels Schrauben, die verhältnismäßig breite Flansche durchdringen, drehfest mit der zugeordneten Welle verbunden sind. Aufgrund der Schraubenbefestigung haftet den bekannten Verbindungselementen der Nachteil an, daß die damit aufgebaute Wellenverbindung verhältnismäßig groß baut. Außerdem ist eine solche Wellenverbindung nicht geeignet für in weiten Grenzen variierbare Drehmomente, da die Anzahl der Verbindungselemente ohne erhebliche Änderungen an den Kupplungsteilen nicht erhöht werden kann.

Aufgabe der Erfindung ist es, eine Wellenverbindung der eingangs beschriebenen Art mit geringen radialen Abmessungen zu schaffen, die in einfacher Weise an unterschiedliche zu übertragende Drehmomente anpassbar ist.

Die Maßnahmen, die zur Lösung dieser Aufgabe erforderlich sind, sind im Kennzeichen des Anspruches 1 beschrieben.

Infolge der Verwendung von Kerbverzahnungen zur Drehmomentübertragung kann die radiale Ausdehnung der Kränze, insbesondere, wenn diese das von der Kerbverzahnung beanspruchte Ausmaß nicht übersteigt, sehr gering gehalten werden. Damit ergibt sich für die Wellenverbindung ein Durchmesser, der nur wenig größer ausfällt als der Durchmesser der Wellen. Sie eignet sich daher vor allem für den Einsatz in solchen Getrieben, bei denen im Wellenverbindungsbereich der zur Verfügung stehende Bauraum in radialer Richtung beschränkt ist. Zur Übertragung eines vorgegebenen max. Drehmoments brauchen lediglich die mit der Kerbverzahnung versehenen Wellenenden bzw. mit den Wellen in Verbindung stehende gesonderte Kupplungsteile in ihrer Länge dem benötigten Verbindungselemente-Paket angepaßt werden. Ferner können alle Verbindungselemente in gleicher Größe ausgeführt werden, was nicht nur deren Herstellung, sondern auch die Lagerhaltung vereinfacht.

Weitere vorteilhafte Einzelheiten der Wellenverbindung gehen aus den übrigen Ansprüchen hervor.

Die Erfindung wird im folgenden anhand einer Zeichnung näher erläutert. Es zeigt:

Fig. 1    Eine Schnittansicht einer erfindungsgemäßen Wellenverbindung,

Fig. 2    eine erste Ausführungsform für ein Verbindungselement der Wellenverbindung und

Fig. 3    eine zweite Ausführungsform eines Verbindungselements.

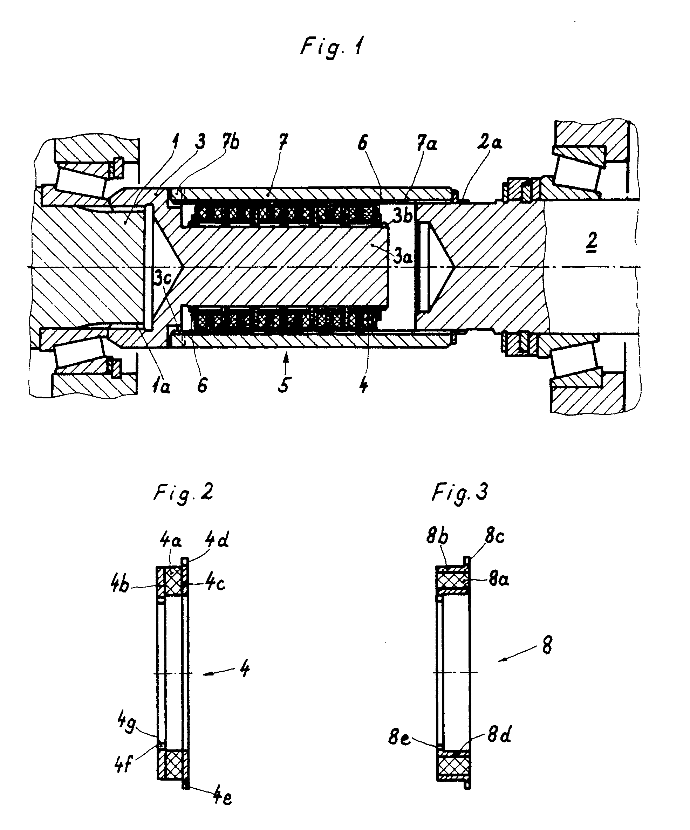

Die in Fig. 1 gezeigte Wellenverbindung dient zur Übertragung eines Drehmoments zwischen den Wellen 1,2, von denen lediglich die gelagerten Endbereiche gezeigt sind. Auf dem im Abstand von der Welle 2 endenden Endbereich der Welle 1 ist über eine Kupplungsverzahnung 1a ein Kupplungsteil 3 mit einem Zapfen 3a aufgesetzt, der über seine gesamte Länge eine Kerbverzahnung 3b trägt. In die Kerbverzahnung 3b greifen elastische, auf den Zapfen 3a aufgeschobene Verbindungselemente 4 ein. Sämtliche Verbindungselemente 4 bilden ein eng aneinanderliegendes Verbindungselemente-Paket 5, das mittels zweier Sprengringe 6 auf dem Zapfen 3a axial unverschiebbar festgelegt ist. Über das Verbindungselemente-Paket 5 ist eine Buchse 7 geschoben, die ebenfalls eine Kerbverzahnung 7a trägt, in die die Verbindungselemente 4 drehmomentübertragend eingreifen. Über ihre Kerbverzahnung 7a ist die Buchse 7 mit einer Kerbverzahnung 2a der Welle 2 drehfest gekoppelt. Im gegenüberliegenden Endbereich weist die Buchse 7 mehrere über den Umfang verteilte, axial hervorstehende Anschläge 7b auf, die in Ausnehmungen 3c des Kupplungsteils 3 eingreifen. Diese besitzen in Umfangsrichtung eine etwas größere Ausdehnung als die Anschläge 7b, so daß sich die Buchse 7 gemeinsam mit der Welle 2 innerhalb des vorgegebenen Leerweges relativ zur Welle verdrehen kann. Eine Überlastung des Gummielementes wird dadurch sicher vermieden.

Das im beschriebenen Ausführungsbeispiel verwendete und in Fig. 2 im einzelnen gezeigte Verbindungselement 4 besteht aus einem ringförmigen elastischen Körper 4a aus einem üblichen Gummimaterial, dessen Stirnflächen flächig mit Ringscheiben 4b, 4c verbunden sind. Die in Fig. 2 rechte Ringscheibe 4c weist einen Innendurchmesser auf, der dem des elastischen Körpers 4a entspricht und ragt mit einem Kranz 4d über die Außenkontur des elastischen Körpers 4a radial hinaus. In diesem Bereich ist der Kranz 4d mit einer Kerbverzahnung 4e versehen, deren Fußkreisdurchmesser nur unwesentlich größer ist als der Außendurchmesser des elastischen Körpers 4a. Die Ringscheibe 4b auf der gegenüberliegenden Seite des elastischen Körpers 4a besitzt dementsprechend einen Außendurchmesser, der im wesentlichen dem des elastischen Körpers 4a entspricht und ragt mit einem Kranz 4f über die Innenkontur des elastischen Körpers 4a nach innen, wo er ebenfalls mit einer Kerbverzahnung 4g versehen ist, deren Kopfkreisdurchmesser geringfügig kleiner ist als der Innendurchmesser des elastischen Körpers 4a.

Das in Fig. 3 gezeigte Verbindungselement 8 besteht aus einem elastischen Körper 8a, der in eine Buchse 8b eingesetzt und fest mit ihr verbunden ist. Die Buchse 8b weist einen radial abstehenden Kranz 8c auf, der im wesentlichen wie der des in Fig. 2 gezeigten Verbindungselements ausgebildet ist. In der Bohrung des elastischen Körpers 8a ist eine weitere Buchse 8d mit einem sich nach innen erstreckenden Kranz 8e eingesetzt, der sich an der dem Kranz 8c abgewandten Stirnseite des elastischen Körpers 8a befindet. Auch dieser Kranz 8e ist in der schon beschriebenen Weise mit einer Kerverzahnung versehen. Ein solches Verbindungselement kann bei der in Fig. 1 gezeigten Wellenverbindung ohne weiteres an Stelle des in Fig. 2 gezeigten Verbindungselements eingesetzt werden. Es ist somit möglich, unter Verwendung dieser beiden Verbindungselemente 4,8 entweder allein oder in Kombination die Wellenverbindung in einfacher Weise einem großen Drehmomentübertragungsbereich bei unterschiedlichsten zul. Verdrehwinkeln anzupassen.

**Patentansprüche**

1. Drehelastische Wellenverbindung unter Verwendung mehrerer gleicher elastischer Verbindungselemente, die aus einem ringförmigen, elastischen Körper und zwei mit diesem Körper flächig verbundenen Endgliedern bestehen, von denen jeweils eines einer der Wellen zugeordnet und über einen aus der im wesentlichen von dem elastischen Körper gebildeten Außenkontur des Verbindungselements nach innen bzw. nach außen herausragenden Kranz drehfest mit ihr verbunden ist,
   **dadurch gekennzeichnet,**
   daß die Drehmomentübertragung zwischen den Wellen (1,2) über den Wellen zugeordnete Zahnprofile (Kerbverzahnungen (3b,7a)) sowie mit Kerbverzahnungen versehene Kränze (4d,4f,8c,8e) der Verbindungselemente (4,8) erfolgt.

2. Wellenverbindung nach Anspruch 1,
   **dadurch gekennzeichnet,**
   daß die radiale Ausdehnung der Kränze (4d,4f,8c,8e) im wesentlichen der ihrer Kerbverzahnungen (4e,4g) entspricht.

3. Wellenverbindung nach Anspruch 1 oder 2,
   **dadurch gekennzeichnet,**
   daß als Endglieder Ringscheiben (4b,4c) vorgesehen sind, die an den Stirnflächen des elastischen Körpers (4a) angeordnet sind.

4. Wellenverbindung nach Anspruch 1 oder 2,
   **dadurch gekennzeichnet,**
   daß als Endglieder Büchsen (8b,8d) vorgesehen sind, die an den inneren bzw. äußeren Zylinderflächen des elastischen Körpers (8a) angrenzen.

5. Wellenverbindung nach den Ansprüchen 1 bis 4,
   **dadurch gekennzeichnet,**
   daß sämtliche Verbindungselemente (4,8) als Verbindungselemente-Paket (5) auf einer der Wellen (Kupplungsteil (3)) axial festgelegt sind.

*Fig. 1*

*Fig. 2*

*Fig. 3*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-B-1 044 637 (HAPP)<br>* Spalte 2, Zeile 52 - Spalte 3, Zeile 3; Spalte 3, Zeile 64 - Spalte 4, Zeile 4; Figuren 1-5 *<br>— — — | 1,2,3,5 | F 16 D 3/76 |
| X | FR-A-2 089 604 (MOTOREN- UND TURBINEN-UNION)<br>* Seite 3, Zeile 4 - Zeile 13; Figur 1 *<br>— — — — — | 1,2,4,5 | |

RECHERCHIERTE SACHGEBIETE (Int. Cl.5)

F 16 D

Der vorliegende Recherchenbericht wurde für alle Patentansprüche erstellt

| Recherchenort | Abschlußdatum der Recherche | Prüfer |
|---|---|---|
| Den Haag | 05 Juni 91 | ORTHLIEB CH.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
·······································
& : Mitglied der gleichen Patentfamilie, übereinstimmendes Dokument